# FASCICULE DE BREVET EUROPEEN

(11) **EP 1 712 830 B1**
(45) Date de publication et mention de la délivrance du brevet: **13.06.2012**
(21) Numéro de dépôt: 06290605.2
(22) Date de dépôt: 13.04.2006
(51) Int. Cl.: B41F 33/00, F16P 3/14, F16P 3/00

(54) **Système de sécurité et presse correspondante**
Sicherheitssystem und entsprechende Presse
Safety system and corresponding press

(30) Priorité: 15.04.2005 FR 0503802
(43) Date de publication de la demande: 18.10.2006
(73) Titulaire: Goss International Montataire S.A., 60160 Montataire (FR)
(72) Inventeur: Caulier, Yves, 60160 Montataire (FR)
(74) Mandataire: Blot, Philippe Robert Emile

(56) Documents cités:
- DE-A1- 10 026 711
- DE-C1- 3 919 167
- US-A1- 2001 042 462
- PATENT ABSTRACTS OF JAPAN vol. 1997, no. 11, 28 novembre 1997 (1997-11-28) -& JP 09 174820 A (MITSUBISHI HEAVY IND LTD), 8 juillet 1997 (1997-07-08)

## Description

La présente invention concerne une presse d'impression ayant les caractéristiques du préambule de la revendication 1.

On connaît du document US-B-6 598 528 (& US-A-2001/42462) une presse d'impression rotative munie d'un système de sécurité. Le système de sécurité dispose d'une pluralité d'unités d'émission de lumière et d'une pluralité d'unités de réception de lumière associées. Ces unités créent un rideau de lumière qui est utilisé pour vérifier l'entrée d'un humain dans l'espace situé entre les unités d'impression lors de l'opération de changement automatique des plaques.

DE 3919167 décrit un système de sécurité pour une installation de stockage.

On connaît par ailleurs des presses d'impression rotatives qui sont munies d'un dispositif d'engagement de la bande dans la presse permettant d'enfiler automatiquement la bande de papier entre les cylindres des unités d'impression.

Toutefois, dans le cas de ces presses, lors du déclenchement de l'engagement de la bande, il est nécessaire de vérifier manuellement si le trajet de bande est libre et si personne ne se trouve dans le trajet afin d'exclure des accidents.

La présente invention a pour but d'augmenter la sécurité d'une presse rotative, et ceci avec des moyens simples et économiques.

A cet effet, l'invention a pour objet une presse selon la revendication 1.

Selon des modes particuliers de réalisation, l'invention comporte en outre des caractéristiques des revendications dépendantes.

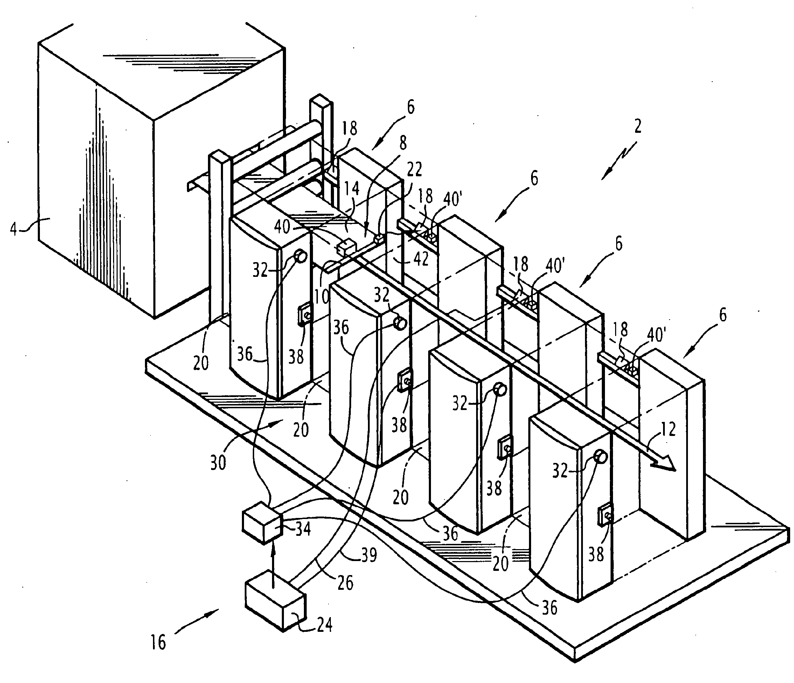

La présente invention sera mieux comprise à la lecture de la description qui va suivre, donnée uniquement à titre d'exemple, et faite en se référant au dessin annexé, sur lequel est représentée une presse d'impression selon l'invention.

La Figure unique montre une presse d'impression offset selon l'invention, désignée par la référence générale 2.

La presse d'impression 2 comporte une unité d'entrée 4, quatre unités d'impression 6, ainsi qu'un dispositif d'engagement de bande 8.

L'unité d'entrée 4 est par exemple un dérouleur de bande de papier. Chaque unité d'impression 6 comporte au moins un cylindre d'impression.

Le dispositif d'engagement de bande 8 comporte une barre de traction 10 qui est adaptée pour être déplacée le long d'un trajet d'engagement 12 afin d'enfiler une bande de papier à imprimer 14 entre l'unité d'entrée 4 et les cylindres des quatre unités d'impression 6.

La presse d'impression 2 comporte en outre un système de sécurité 16 qui est adapté pour avertir les opérateurs de l'arrivée de la bande 14, respectivement de la barre de traction 10, dans des zones différentes du trajet d'engagement 12.

A cet effet, le système de sécurité 16 comprend quatre éléments de détection fixes 18, dont chacun définit une première zone de sécurité 20 tridimensionnelle, qui est dans le cas présent un volume s'étendant derrière chaque unité d'impression 6 et dans lequel se trouve une partie du trajet 12. Sur la Figure, quatre éléments de détection sont représentés. Ce nombre d'éléments de détection 18 est variable, il dépend du nombre de zones à surveiller 20. Les zones de sécurité 20 ne sont pas concordantes, et ne se chevauchent pas en l'occurrence. En variante, les zones de sécurité 20 se chevauchent partiellement.

Le système de sécurité 16 est en outre muni d'un élément de détection mobile 22, qui est fixé à la barre de traction 10.

La présence de l'élément de détection mobile 22 dans la première zone de sécurité 20 est détectable par l'élément de détection fixe 18 associé à cette zone 20. L'élément de détection 22 est par exemple un émetteur du type à transmission sans fil, tandis que les éléments de détection 18 sont des récepteurs du type à transmission sans fil.

Enfin, le système de sécurité 16 est muni d'une unité d'exploitation 24 qui est connectée aux éléments de détection fixes 18 par l'intermédiaire d'une liaison de signal 26. Par l'intermédiaire de ces liaisons de signal 26, l'unité d'exploitation 24 est adaptée pour détecter l'entrée ou la présence de l'élément de détection mobile 22 dans chacune des zones de sécurité 20.

Le système de sécurité 16 est en outre muni d'un dispositif d'avertissement 30, qui comporte pour chaque élément de détection fixe 18 un organe d'avertissement sonore et/ou lumineux 32 connecté à une unité centrale 34 par une liaison de signal 36. Chacun des organes d'avertissement 32 est associé à l'une des premières zones de sécurité 20.

L'unité d'exploitation 24 est adaptée pour déclencher le dispositif d'avertissement 30 lorsque l'élément de détection mobile 22 entre dans l'une des premières zones de sécurité 20. L'unité 24 est en outre adaptée pour arrêter le dispositif d'avertissement 30 correspondant lorsque l'élément de détection mobile 22 sort hors de l'une des premières zones de sécurité 20.

En outre, le dispositif d'avertissement 30 comporte, pour chaque élément de détection fixe 18, un organe d'arrêt 38 qui est lié à l'unité centrale 34 par une liaison de signal 39.

Le système de sécurité 16 comprend en outre un capteur de présence 40 qui est fixé sur la barre de traction 10. Le capteur de présence 40 est donc fixe par rapport à l'élément de détection mobile 22 et est adapté pour détecter la présence d'un objet, notamment d'un humain, dans une seconde zone de sécurité 42 qui s'étend en amont de la barre de traction 10. Dans le cas présent, la seconde zone de sécurité 42 est identique à l'une des premières zones de sécurité 18. La seconde zone de sécurité 42 est également tri-dimensionnelle.

En variante, le capteur de présence 40 est remplacé par un ou plusieurs capteurs de présence 40' fixes qui est/sont fixé(s) à côté d'au moins l'un des éléments de détection fixes 18. Dans ce cas, la seconde zone de sécurité 42 du ou de chaque capteur 40' chevauche la première zone de sécurité 20 de cet élément de détection fixe 18. Quatre capteurs de présence 40' sont illustrés sur la Figure. Chaque capteur 40' est associé à l'un des éléments 18.

L'unité d'exploitation 24 est adaptée pour déclencher le capteur de présence 40 lorsque l'élément de détection mobile 22 entre dans l'une des premières zones de sécurité 20 et est adapté pour vérifier la présence d'un objet ou d'un humain dans la seconde zone de sécurité 42 lors de l'entrée dans la première zone de sécurité 20.

La presse d'impression 2 selon l'invention fonctionne de la manière suivante.

Afin d'engager la bande de papier 14 dans la presse d'impression 2, une extrémité de la bande 14 est fixée à la barre de traction 10 et cette barre de traction 10 se déplace le long du trajet 12 successivement à travers l'unité d'entrée 4 ainsi qu'à travers les quatre unités d'impression 6.

Lorsque l'élément de détection mobile 22 entre dans l'une des premières zones de sécurité 20, l'unité d'exploitation 24 déclenche le dispositif d'avertissement 30, ce qui allume l'organe d'avertissement 32 associé à cette première zone de sécurité 20. Ensuite, lorsqu'un opérateur se trouve dans la première zone de sécurité 20 dans laquelle l'élément de détection mobile 22 vient d'entrer, il sort hors de cette zone 20, et dans le cas où il souhaite arrêter la barre de traction 10, il actionne l'organe 38. L'actionnement de l'organe d'arrêt 38 émet un signal d'arrêt sur la liaison de signal 39. Ce signal est détecté par l'unité d'exploitation 24 qui arrête le déplacement de la barre de traction 10 le long du trajet 12. La séquence de redémarrage de la barre de traction 10 se fait à partir du pupitre et/ou d'une platine de commande non représenté sur la Figure. La barre de traction 10 poursuit son déplacement jusqu'à l'entrée de l'élément de détection mobile 22 dans la première zone de sécurité 20 suivante.

Lors de l'entrée dans cette première zone de sécurité 20 suivante, l'organe d'avertissement 32 associé à cette première zone de sécurité 20 est déclenché lorsqu'un opérateur se trouve dans cette zone, il sort de celle-ci ou actionne l'organe d'arrêt 38.

Cette opération est répétée jusqu'à ce que la barre de traction 10 ait parcouru tout le trajet 12.

Lors de l'entrée de l'élément de détection mobile 22 dans une première zone de sécurité 20, l'unité d'exploitation 24 déclenche le capteur de présence 40, qui vérifie si aucune personne et aucun objet ne se trouve dans cette zone de sécurité 20. Si cette vérification est positive, c'est-à-dire aucune personne ne se trouve dans cette zone 20, l'unité d'exploitation 24 commande la barre de traction 10 à continuer son trajet.

En variante, un organe d'avertissement 32 peut être disposé sur la barre de traction 10. Dans ce cas, un seul organe d'avertissement 32 est nécessaire pour le système de sécurité 16.

Dans le cas d'une vérification de présence humaine par le capteur de présence 40, les organes d'avertissement 32 et les organes de validation 38 peuvent être omis, ainsi réduisant encore les coûts du dispositif.

L'élément de détection mobile 22 comporte une alimentation en énergie autonome et indépendante de l'unité 24.

En variante encore, le système de sécurité 16 ne comporte pas de capteur de présence 40.

## Revendications

1. Presse d'impression (2), du type muni d'au moins deux unités d'impression (6) et d'un système de sécurité (16), **caractérisée en ce que** la presse comporte un dispositif d'engagement de bande d'impression (8) dans la presse, ce dispositif d'engagement (8) étant muni d'un organe de transport (10) de l'extrémité de la bande (14) dans la presse, et **en ce que**
le système de sécurité (16), comprend
- au moins deux éléments de détection fixes (18) dont chacun définit une première zone de sécurité (20), ces premières zones de sécurité (20) étant non concordantes,
- un élément de détection mobile (22) adapté pour coopérer avec les deux éléments de détection fixes (18), et
- une unité d'exploitation (24) au moins connectée aux éléments de détection fixes (18) et adaptée pour détecter la présence de l'élément de détection mobile (22) dans l'une des premières zones de sécurité (20) l'élément de détection mobile (22) étant mobile selon un trajet prédéterminé (12), et les éléments de détection fixes (18) étant disposés le long du trajet prédéterminé (12), de telle sorte que l'organe de détection mobile est adapté pour traverser les premières zones de sécurité (20), l'élément de détection mobile (22) étant fixé à l'organe de transport (10) et les éléments de détection fixes (18) étant disposés le long du trajet (12) de l'organe de transport (10), de telle sorte que l'élément de détection mobile traverse successivement les premières zones de sécurité (20) lors d'un déplacement le long du trajet.

2. Presse d'impression (2) selon la revendication 1, **caractérisé en ce que** le système de sécurité comprend en outre un capteur de présence (40) adapté pour détecter la présence d'un objet, notamment d'un humain, dans une seconde zone de sécurité (42).

3. Presse d'impression (2) selon la revendication 2, **caractérisé en ce que** le capteur de présence (40) est fixe par rapport à l'élément de détection mobile (22).

4. Presse d'impression (2) selon la revendication 2, **caractérisé en ce que** le capteur de présence (40') est fixe par rapport aux éléments de détection fixes (18), et **en ce que** la seconde zone de sécurité (42) chevauche au moins partiellement l'une des premières zones de sécurité (20).

5. Presse d'impression (2) selon l'une quelconque des revendications précédentes, **caractérisé en ce qu'**il comprend en outre un dispositif d'avertissement (30), et **en ce que** l'unité d'exploitation (24) est adaptée pour déclencher le dispositif d'avertissement (30) lorsque l'élément de détection mobile (22) entre dans au moins l'une des premières zones de sécurité (20).

6. Presse d'impression (2) selon la revendication 5, **caractérisé en ce que** le dispositif d'avertissement (30) comprend des organes d'avertissement sonore et/ou lumineux (32), et **en ce qu'**un organe d'avertissement (32) est associé à chaque première zone de sécurité (20).

7. Presse d'impression (2) selon l'une des revendications 2 à 4 et la revendication 5 prises ensemble, **caractérisé en ce que** l'unité d'exploitation (24) est adaptée pour déclencher le capteur de présence (40) lorsque l'élément de détection mobile (22) entre dans l'une des premières zones de sécurité (20) et est adapté pour vérifier la présence d'un objet dans la seconde zone (42) de sécurité lors de l'entrée dans la première zone de sécurité (20).

## Claims

1. A printing press (2) of the type comprising: at least two print units (6) and a safety system (16), caracterized in that the press comprises an engagement device for engaging a print web (8) in the press, the engagement device comprising a transport member (10) for transporting the end of the web (14) through the press; and in that the safety system (16) includes:
- at least two stationary detector elements (18) each defining a respective first safety zone (20), the first safety zones (20) not coinciding;
- a moving detector element (22) adapted to co-operate with the two stationary detector elements (18),
- a control unit (24) connected at least to the stationary detector elements (18) and adapted to detect the presence of the moving detector element (22) in one of the first safety zones (20); the moving detector element (22) being movable along a predetermined path (12), the stationary detector elements (18) being disposed along the predetermined path (12) in such a manner that the moving detector element is adapted to pass through the first safety zones (20); the moving detector element (22) is secured to the transport member (10) and the stationary detector elements (18) are disposed along the path (12) of the transport member (10) in such a manner that the moving detector element passes in succession through the first safety zones (20) during displacement along the path.

2. The printing press (2) according to claim 1, **characterized in that** the safety system comprises furthermore a presence sensor (40) adapted to detect the presence of an object, in particular a human being, in a second safety zone (42)

3. The printing press (2) according to claim 2, **characterized in that** the presence sensor (40) is fixed with respect to the moving detector element.

4. The printing press (2) according to claim 2, **characterized in that** the presence sensor (40') is stationary relative to the stationary detector elements (18), and wherein the second safety zone (42) overlaps one of the first safety zones (20), at least in part.

5. The printing press (2) according to any one of the preceding claims, **characterized in that** it further comprises a warning device (30), and **in that** the control system (24) is adapted to trigger the warning device (30) upon the moving detector element (22) entering at least one of the first safety zones (20).

6. The printing press (2) according to claim 5, **characterized in that** the warning device (30) comprises audible and/or light-emitting warning members (32), and wherein a warning member (32) is associated with each first safety zone (20).

7. The printing press (2) according to any one of claims 2 to 4 and claim 5 taken together, **characterized in that** the control unit (24) is adapted to trigger the presence sensor (40) when the moving detector element (22) enters into one of the first safety zones (20) and is adapted to verify the presence of an object in the second safety zone (42) upon entering the first safety zone.

## Patentansprüche

1. Druckmaschine (2), umfassend mindestens zwei Druckwerke (6) und ein Sicherheitssystem (1), **dadurch gekennzeichnet, dass** die Druckmaschine eine Druckbahnhalterung (8) aufweist, wobei die Druckbahnhalterung (8) mindestens ein Transportorgan (10) für den Rand der Druckbahn (14) in der Druckmaschine aufweist, wobei
das Sicherheitssystem (16) umfasst:
- mindestens zwei feste Detektionselemente (18), von denen jedes eine erste Sicherheitszone (20) definiert, wobei die ersten Sicherheitszonen (20) nicht deckungsgleich sind,
- ein bewegliches Detektionselement (22), das geeignet ist, mit den festen Detektionselementen zusammenzuwirken, und
- eine Steuereinheit (24), die mindestens mit den festen Detektionselementen (18) verbunden ist, und geeignet zum Erkennen der Anwesenheit des beweglichen Detektionselements (22) in einer der ersten Sicherheitszonen (20) ist,
das bewegliche Detektionselement (22) entlang einer vorbestimmten Bahn (12) beweglich ist, und die festen Detektionselemente (18) entlang der vorbestimmten Bahn (12) angebracht sind, derart, dass das bewegliche Detektionselement zu einem Durchqueren der ersten Sicherheitszonen (20) geeignet ist, und das Detektionselement (22) an einem Transportorgan (10) befestigt ist und die festen Detektionselemente (18) entlang der Bahn (12) des Transportorgans (10) angeordnet sind, derart, dass das bewegliche Detektionselement die ersten Sicherheitszonen (20) während der Bewegung entlang der Bahn (12) durchquert.

2. Druckmaschine (2) nach Anspruch 1, **dadurch gekennzeichnet, dass** das Sicherheitssystem einen Anwesenheitssensor (40) umfasst, der zum Erkennen der Anwesenheit eines Objektes, insbesondere eines Menschen, in einer zweiten Sicherheitszone (42) geeignet ist.

3. Druckmaschine (2) nach Anspruch 2, **dadurch gekennzeichnet, dass** der Anwesenheitssensor (40') bezüglich des beweglichen Detektionselements (22) fest ist.

4. Druckmaschine (2) nach Anspruch 2, **dadurch gekennzeichnet, dass** der Anwesenheitssensor (40') bezüglich der festen Detektionselemente (18) fest ist, und dass die zweite Sicherheitszone (22) und eine der ersten Sicherheitszonen (20) zumindest teilweise überlappen.

5. Druckmaschine (2) nach einem der vorhergehenden Ansprüche, **dadurch gekennzeichnet, dass** diese eine Warnvorrichtung (30) umfasst, und die Steuereinheit (24) zu einem Auslösen der Warnvorrichtung (30) geeignet ist, wenn das bewegliche Detektionselement (22) in mindestens eine der ersten Sicherheitszonen (20) gelangt.

6. Druckmaschine (2) nach Anspruch 5, **dadurch gekennzeichnet, dass** die Warnvorrichtung (30) akustische und/oder optische Warnorgane (32) umfasst, und jeweils jeder ersten Sicherheitszone (20) ein Warnorgan (32) zugeordnet ist.

7. Druckmaschine (2) nach einem der Ansprüche 2 bis 4 und 5, **dadurch gekennzeichnet, dass** die Steuereinheit (24) geeignet ist, den Anwesenheitssensor (40) auszulösen, wenn das bewegliche Detektionselement (22) in eine der ersten Sicherheitszonen (20) gelangt, und geeignet ist, die Anwesenheit eines Objekts in der zweiten Sicherheitszone (42) beim Eintritt in die erste Sicherheitszone (20) zu erkennen.
